# EUROPEAN PATENT APPLICATION

(11) **EP 3 296 851 A1**
(43) Date of publication of application: **21.03.2018**
(21) Application number: 15891769.0
(22) Date of filing: 08.05.2015
(51) Int. Cl.: G06F 3/0482, G06F 3/0488

(54) **INPUT RECEPTION METHOD, INPUT RECEPTION PROGRAM, AND TERMINAL DEVICE**

(71) Applicant: Fujitsu Limited, Kawasaki-shi, Kanagawa 211-8588 (JP)
(72) Inventor: MATSUDA, Yugo, Kawasaki-shi Kanagawa 211-8588 (JP); TSUYUKI, Yasuhiro, Kawasaki-shi Kanagawa 211-8588 (JP); SUGISAKI, Hidekazu, Kawasaki-shi Kanagawa 211-8588 (JP)
(74) Representative: Hoffmann Eitle
(86) International application number: PCT/JP2015/063379
(87) International publication number: WO 2016/181443

(57) **Abstract**

An input reception method, an input reception program, and a terminal device, which enable freedom of operation in display of menus to be improved, are provided.

In the input reception method, a computer (10) executes a process of using contents of a handwritten input in: a process of narrowing down menu items of a lower layer of a specific menu item; or a process of receiving the contents as contents of an instruction related to an order for the specific menu item, when it is detected that the handwritten input has been executed at an input position corresponding to the specific menu item of plural menu items displayed on a display screen.

## Description

### [Technical Field]

The present invention relates to an input reception method, an input reception program, and a terminal device.

### [Background Art]

There are devices, such as tablet terminals and smartphones, which have touch panels. These devices may be used, for example, for a menu in a store to be displayed, and when any of items in the displayed menu is specified by touch operation, the specified menu item is selected, or a menu of a lower layer for that menu item is displayed.

### [Citation List]

### [Patent Citation]

Patent Literature 1: Japanese Laid-open Patent Publication No. 2005-235116

### [Summary of Invention]

### [Technical Problem]

However, with conventional techniques, desired screens are unable to be reached unless correct routes are followed according to structures of menus, and freedom of operation thereof is not sufficiently high.

An object of one aspect of the present invention is to improve freedom of operation in display of menus.

### [Solution to Problem]

According to an aspect of an embodiment, an input reception method includes: using input contents of a handwritten input in: a process of narrowing down menu items of a lower layer of a specific menu item; or a process of receiving the input contents as contents of an instruction related to an order for the specific menu item; when it is detected that the handwritten input has been executed at an input position corresponding to the specific menu item of plural menu items displayed on a display screen.

### [Advantageous Effects of Invention]

Freedom of operation in display of menus is able to be improved.

### [Brief Description of Drawings]

FIG. 1 is a block diagram illustrating an example of a configuration of an information processing system of an embodiment.
FIG. 2 is a diagram illustrating an example of identification of an associated area.
FIG. 3 is a diagram illustrating another example of the identification of an associated area.
FIG. 4 is a diagram illustrating an example of screen transition according to a handwritten input.
FIG. 5 is a diagram illustrating another example of the screen transition according to a handwritten input.
FIG. 6 is a diagram illustrating another example of the screen transition according to a handwritten input.
FIG. 7 is a diagram illustrating another example of the screen transition according to a handwritten input.
FIG. 8 is a diagram illustrating another example of the screen transition according to a handwritten input.
FIG. 9 is a diagram illustrating another example of the screen transition according to a handwritten input.
FIG. 10 is a diagram illustrating an example of a structure of menu items.
FIG. 11 is a diagram illustrating an example of a classification DB.
FIG. 12 is a diagram illustrating an example of a category DB.
FIG. 13 is a diagram illustrating an example of a merchandise item DB.
FIG. 14 is a diagram illustrating an example of a material DB.
FIG. 15 is a diagram illustrating an example of an option DB.
FIG. 16 is a diagram illustrating an example of a screen display DB.
FIG. 17 is a diagram illustrating an example of an order DB.
FIG. 18 is a flow chart illustrating an example of an input reception process of the embodiment.
FIG. 19 is a flow chart illustrating an example of a referent determination process.
FIG. 20 is a diagram illustrating an example of reference to the respective DBs in the referent determination process.
FIG. 21 is a diagram illustrating another example of the reference to the respective DBs in the referent determination process.
FIG. 22 is a diagram illustrating another example of the screen transition according to a handwritten input.
FIG. 23 is a diagram illustrating another example of the screen transition according to a handwritten input.
FIG. 24 is a diagram illustrating an example of a computer that executes an input reception program.

### [Embodiments for Carrying Out the Invention]

Hereinafter, based on the drawings, embodiments of an input reception method, an input reception program, and a terminal device, which are disclosed by the present application, will be described in detail. The disclosed techniques are not limited by these embodiments. Further, the following embodiments may be combined with one another as appropriate so long as no contradiction arises therefrom. Embodiments

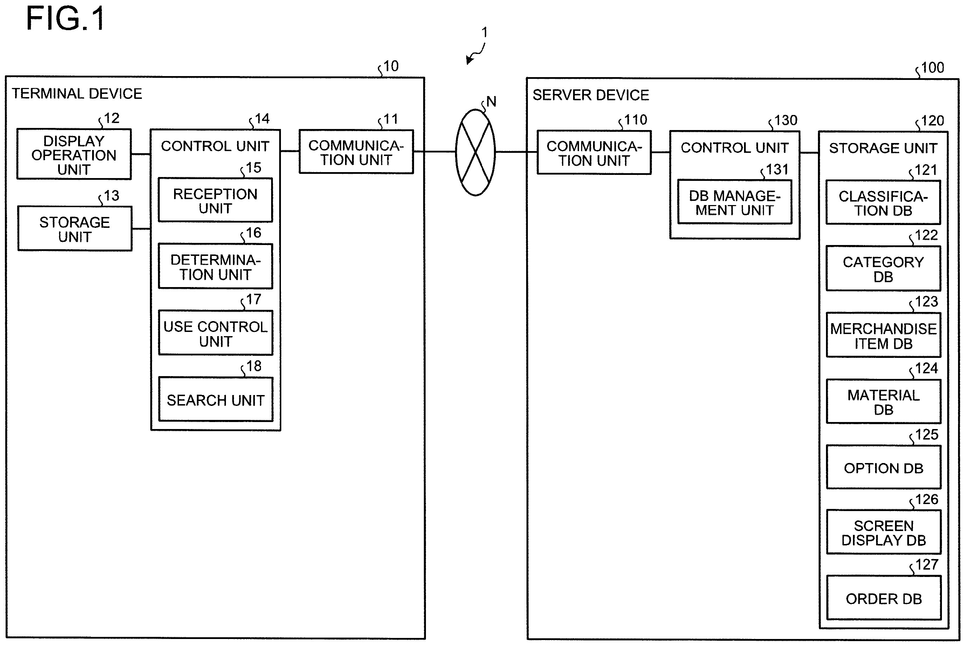

FIG. 1 is a block diagram illustrating an example of a configuration of an information processing system of an embodiment. An information processing system 1 illustrated in FIG. 1 has a terminal device 10, and a server device 100. Although FIG. 1 illustrates a case where the system has a single terminal device 10, the number of terminal devices 10 is not limited, and the information processing system 1 may have any number of terminal devices 10.

The terminal device 10 and the server device 100 are connected to be able to communicate with each other via a network N. Regardless of whether the network N is wired or wireless, any type of communication network may be adopted as the network N, including the Internet, a local area network (LAN), and a virtual private network (VPN).

The terminal device 10 is a computer used by, for example, a customer who makes an order in a restaurant, that is, a user. For example, the terminal device 10 presents various menu screens received from the server device 100, to the user by displaying the various menu screens. The terminal device 10 is able to use, for example, a Web browser for display and operation of the various menu screens and the like. Further, the terminal device 10 receives a handwritten input on a display screen for the various menu screens and the like. A tablet terminal may be adopted as an example of the terminal device 10. As to the terminal device 10, not only a portable terminal, such as the above mentioned tablet terminal or the like, but also a stationary personal computer, may be adopted as the terminal device 10. Furthermore, if the terminal device 10 is a portable terminal, other than the above mentioned tablet terminal, for example, a mobile communication terminal or the like, such as a portable personal computer, a smartphone, or a mobile phone, may be adopted as the terminal device 10.

In response to a handwritten input on the display screen, the terminal device 10 determines whether or not the handwritten input is an input associated with a specific element, for example, a menu item, which is displayed on the display screen. If it is determined that the handwritten input is an input associated with a specific element displayed on the display screen, the terminal device 10 uses contents of the handwritten input, by a use method different from that in a case where the handwritten input is not determined to be an input associated with a specific element displayed on the display screen. That is, if, for example, a handwritten input is an input associated with a menu item, the terminal device 10 transmits contents of the handwritten input as a request for a search within that menu item, to the server device 100, and receives search results. Further, if, for example, a handwritten input is not associated with a menu item, the terminal device 10 transmits contents of the handwritten input as a request for a search through the whole menu, to the server device 100, and receives search results. Thereby, operation associated with a specific element is able to be made smooth.

The server device 100 has, for example, a menu database for a restaurant (hereinafter, "database" being referred to as "DB"), and causes the terminal device 10 to display a menu screen. Further, when the server device 100 receives a search request from the terminal device 10, the server device 100 searches the menu DB according to the search request, and transmits results of the search to the terminal device 10. The search request may be, for example, a SQL statement. Furthermore, when the server device 100 receives various types of information, such as order information, from the terminal device 10, the server device 100 stores the various types of information received, into the menu DB. If the server device 100 receives order information, for example, the server device 100 stores the received order information into the menu DB, and delivers an order to a worker in a restaurant by transmitting the order information to an order display device not illustrated and causing the order display device to display thereon the order information.

Next, a configuration of the terminal device 10 will be described. As illustrated in FIG. 1, the terminal device 10 has a communication unit 11, a display operation unit 12, a storage unit 13, and a control unit 14. The terminal device 10 may have, in addition to the functional units illustrated in FIG. 1, various functional units that a known computer has, for example, functional units, such as various input devices and a sound output device.

The communication unit 11 is realized by, for example, a communication module, a network interface card (NIC), or the like, of a wireless LAN or the like. The communication unit 11 is a communication interface, which is connected to the server device 100 via the network N wiredly or wirelessly, and which controls communication of information to and from the server device 100. The communication unit 11 receives data of the various menu screens from the server device 100. The communication unit 11 outputs the received data of the various menu screens to the control unit 14. Further, the communication unit 11 transmits a search request, and various types of information including order information and the like, which have been input from the control unit 14, to the server device 100. Search results according to a search request and order information are reflected in the various menu screens.

The display operation unit 12 is a display device for displaying thereon various types of information, and an input device that receives various operations from a user. For example, the display operation unit 12 is realized by a liquid crystal display or the like serving as the display device. Further, for example, the display operation unit 12 is realized by a touch panel or the like serving as the input device. That is, in the display operation unit 12, the display device and the input device are integrated together. The display operation unit 12 outputs an operation input by a user as operation information, to the control unit 14. The operation information may be, for example, stroke input indicating coordinates on the display screen from touch to separation of a user's finger on and from the touch panel, that is, a handwritten input.

The storage unit 13 is realized by, for example: a semiconductor memory element, such as a random access memory (RAM) or a flash memory; and a storage device, such as a hard disk or an optical disk. The storage unit 13 stores therein the data of the various menu screens received from the server device 100. Further, the storage unit 13 stores therein information used in processing at the control unit 14.

The control unit 14 is realized by, for example, a program being executed by a central processing unit (CPU), a micro processing unit (MPU), or the like, with a RAM being a work area, the program having been stored in a storage device inside thereof. Further, the control unit 14 may be realized by, for example, an integrated circuit, such as an application specific integrated circuit (ASIC) or a field programmable gate array (FPGA). The control unit 14: has a reception unit 15, a determination unit 16, a use control unit 17, and a search unit 18; and realizes or executes functions and effects of information processing described below. An internal configuration of the control unit 14 is not limited to the configuration illustrated in FIG. 1, and may be any other configuration as long as the control unit 14 is configured to execute the later described information processing.

The reception unit 15 receives operation information, for example, coordinates of stroke input, from the display operation unit 12. Based on the coordinates of the stroke input, the reception unit 15 determines whether or not the stroke input has finished. If the stroke input has finished, the reception unit 15 outputs the received coordinates of the stroke input to the determination unit 16. Further, the reception unit 15 recognizes a handwritten character based on the coordinates of the stroke input, and generates contents of the handwritten input. The reception unit 15 outputs the generated contents of the handwritten input to the use control unit 17. The reception unit 15 may transmit the coordinates of the stroke input to the server device 100, and receive, from the server device 100, the contents of the handwritten input generated through recognition of the handwritten character by the server device 100.

When the coordinates of the stroke input are input from the reception unit 15, the determination unit 16 determines whether or not the stroke input is an input associated with a specific element displayed in the display screen being displayed on the display operation unit 12. That is, the determination unit 16 determines, for example, whether or not the stroke input is an input associated with any of menu items displayed in the menu screen. If the stroke input is an input associated with any of the menu items, the determination unit 16 outputs associated area information added with attribute information of that menu item, to the use control unit 17. If the stroke input is not an input associated with any of the menu items, the determination unit 16 outputs non-associated area information not added with attribute information of a menu item, to the use control unit 17.

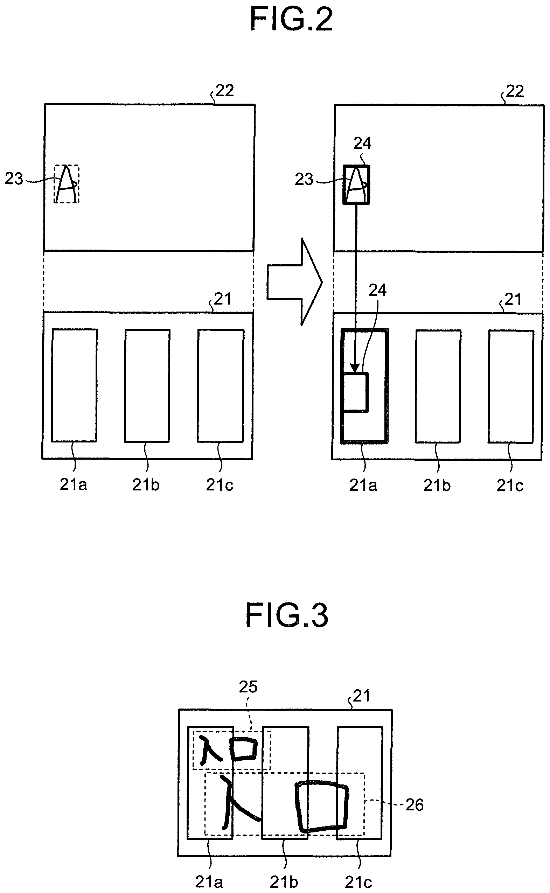

By use of FIG. 2 and FIG. 3, an associated area will be described. FIG. 2 is a diagram illustrating an example of identification of an associated area. As illustrated in FIG. 2, displayed on the display operation unit 12 are: a display screen 21, in which menu items and the like are displayed; and a track screen 22, in which a track of stroke input is displayed. In the display screen 21, for example, menu items 21a, 21b, and 21c are displayed. In this case, the display screen 21 is a menu screen. When a character 23 is input by handwriting of a user, based on coordinates of stroke input that are input from the reception unit 15, the determination unit 16 detects an input area 24. The determination unit 16 compares the input area 24 with areas of the menu items 21a, 21b, and 21c that are associated areas of the display screen 21. If, for example, the input area 24 is included in the area of the menu item 21a, the determination unit 16 identifies the menu item 21a as an associated area.

The determination unit 16 identifies, for example, a smaller area of areas, in which an input area and the associated areas overlap each other over a predetermined threshold value or more, for example, 70% or more thereof. Further, the determination unit 16 compares an average character size for one character of input characters, with a length of a shorter one of vertical and horizontal lengths of a specific element, for example, a menu item. If, as a result of the comparison, the average character size is shorter than the shorter length of the vertical and horizontal lengths of the specific element, the determination unit 16 identifies the area of that specific element as the associated area.

FIG. 3 is a diagram illustrating another example of the identification of an associated area. As illustrated in FIG. 3, for example, there are: a case where characters, "toro" (two Japanese katakana characters meaning "fatty part of fish or meat" in Japanese), illustrated in an input area 25 are input; and a case where the characters, "toro", illustrated in an input area 26 are input; on the display screen 21. If the characters are input in the input area 25, since the average size for one character thereof is shorter than a length of a short side of the menu item 21a, the determination unit 16 outputs associated area information added with attribute information of the menu item 21a, as an associated area of the characters, "toro", in the input area 25, to the use control unit 17. Further, if the characters are input in the input area 26, since the average size for one character thereof is longer than a length of a short side of the menu item 21a, the determination unit 16 determines that the characters, "toro", in the input area 26 have been input over the whole screen. As a result of the determination, the determination unit 16 outputs non-associated area information not added with attribute information of a menu item, to the use control unit 17. An input box, where handwritten input is executed on the display screen 21, may be provided on the display screen 21.

Returning to the description of FIG. 1, contents of the handwritten input are input to the use control unit 17 from the reception unit 15. Further, the associated area information or non-associated area information is input to the use control unit 17 from the determination unit 16. If associated area information is input from the determination unit 16, the use control unit 17 uses the contents of the handwritten input that have been input from the reception unit 15, by a use method different from that in a case where non-associated area information is input from the determination unit 16.

As an example of the use method for the contents of the handwritten input, a case where the menu DB of the server device 100 is searched will be described. If associated area information is input from the determination unit 16, for example, the use control unit 17 outputs a search instruction to the search unit 18 for a search by use of the attribute information of the menu item included in the associated area information. Further, if non-associated area information is input from the determination unit 16, for example, the use control unit 17 outputs a search instruction to the search unit 18 for a search without use of attribute information of a menu item.

A referent determination process for determination of a target of a search instruction will now be described. Based on input of associated area information or non-associated area information, the use control unit 17 determines whether or not an associated area has been able to be identified. If an associated area has not been able to be identified, that is, if non-associated area information has been input, the use control unit 17 determines respective menu items on the display screen currently being displayed as a referent. If an associated area has been able to be identified, that is, if associated area information has been input, the use control unit 17 determines menu items of a hierarchical layer lower than that of the menu item of the associated area as a referent.

If an associated area has not been able to be identified, the use control unit 17 outputs a search instruction to the search unit 18 for an AND search with the referent, that is, the respective menu items being displayed, and the input characters corresponding to the contents of the handwritten input. When the use control unit 17 receives results of the search from the search unit 18, the use control unit 17 determines whether or not the number of the search results is equal to or greater than one. If the number of the search results is equal to or greater than one, the use control unit 17 ends the referent determination process, and updates the display screen being displayed on the display operation unit 12 to a display screen displaying thereon the search results.

If the number of the search results is not equal to or greater than one, that is, is zero, the use control unit 17 outputs a search instruction to the search unit 18 for a search for a classification of the input characters corresponding to the contents of the handwritten input. When a result of the search is input from the search unit 18, the use control unit 17 determines which one of option, merchandise item or material, and category, the classification of the input characters, which is the search result, is. If the classification of the input characters is option, the use control unit 17 determines the input with respect to the respective menu items being displayed is invalid and ends the referent determination process. If the input is determined to be invalid, the use control unit 17 erases the track of the handwritten input from the track screen without updating the display screen being displayed.

If the classification of the input characters is merchandise item or material, the use control unit 17 outputs a search instruction to the search unit 18 for execution of an OR search for merchandise items with the referent and the input characters. When results of the search are input from the search unit 18, the use control unit 17 ends the referent determination process, and updates the display screen being displayed on the display operation unit 12 to a display screen displaying thereon the search results.

If the classification of the input characters is category, the use control unit 17 determines an attribute, that is, a classification, of the current menu items being the referent. If the classification of the referent is merchandise item, the use control unit 17 outputs a search instruction to the search unit 18 for execution of an OR search for merchandise items with the merchandise items being the referent and the input category name. When results of the search are input from the search unit 18, the use control unit 17 ends the referent determination process, and updates the display screen being displayed on the display operation unit 12 to a display screen displaying thereon the search results.

If the classification of the referent is category, the use control unit 17 outputs a search instruction to the search unit 18 for execution of an OR search for categories, with the category names being the referent and the input category name. When results of the search are input from the search unit 18, the use control unit 17 ends the referent determination process, and updates the display screen being displayed on the display operation unit 12 to a display screen displaying thereon the search results.

If the classification of the referent is option, the use control unit 17 outputs a search instruction to the search unit 18 for execution of an OR search for merchandise items with the immediately preceding list of merchandise items and the input category name. When results of the search are input from the search unit 18, the use control unit 17 ends the referent determination process, and updates the display screen being displayed on the display operation unit 12 to a display screen displaying thereon the search results.

If an associated area has been able to be identified, the use control unit 17 outputs a search instruction to the search unit 18 for a search for a classification of the input characters corresponding to the contents of the handwritten input, with respect to a referent that is menu items of a hierarchical layer lower than the menu item of the associated area. When a result of the search is input from the search unit 18, the use control unit 17 determines which one of option, merchandise item or material, and category, the classification of the input characters, which is the search result, is.

If the classification of the input characters is option, the use control unit 17 determines whether or not the referent is merchandise items. If the referent is merchandise items, the use control unit 17 outputs a search instruction to the search unit 18 for execution of an AND search for merchandise items and options with the referent and the input option name. When results of the search are input from the search unit 18, the use control unit 17 ends the referent determination process, and updates the display screen being displayed on the display operation unit 12 to a display screen displaying thereon the search results. If the referent is not merchandise items, the use control unit 17 determines the input with respect to the respective menu items being displayed is invalid and ends the referent determination process. If the input is determined to be invalid, the use control unit 17 erases the track of the handwritten input from the track screen without updating the display screen being displayed.

If the classification of the input characters is merchandise item or material, the use control unit 17 outputs a search instruction to the search unit 18 for execution of an AND search for merchandise items with the referent and the input characters. When results of the search are input from the search unit 18, the use control unit 17 ends the referent determination process, and updates the display screen being displayed on the display operation unit 12 to a display screen displaying thereon the search results.

If the classification of the input characters is category, the use control unit 17 outputs a search instruction to the search unit 18 for execution of an AND search for categories and merchandise items with the referent and the input category name. When results of the search are input from the search unit 18, the use control unit 17 ends the referent determination process, and updates the display screen being displayed on the display operation unit 12 to a display screen displaying thereon the search results.

When a search instruction is input from the use control unit 17, the search unit 18 generates a search request based on the search instruction. For example, the search unit 18 generates, based on a search instruction, a SQL statement corresponding to contents of the search instruction, as a search request. The search unit 18 transmits the generated search request to the server device 100 via the communication unit 11 and the network N.

Further, the search unit 18 receives search results corresponding to the search request from the server device 100 via the network N and the communication unit 11. The search unit 18 outputs the received search results to the use control unit 17. If the search instruction is based on a handwritten input on a display screen having plural choices displayed thereon, the search unit 18 generates, based on contents of the handwritten input, a search request for alternatives corresponding to the plural choices to be searched. For example, it is assumed that a menu screen, through which a way whisky is drunk is input, is being displayed on the display operation unit 12. In a case where "straight", "on the rocks", and "with cold water" are available as menu items on the menu screen, when "mizu" (a Chinese character meaning "water" in Japanese) is input by handwriting over the whole menu screen, the search unit 18 then generates a search request for a search to be executed for "with cold water (single)" and "with cold water (double)".

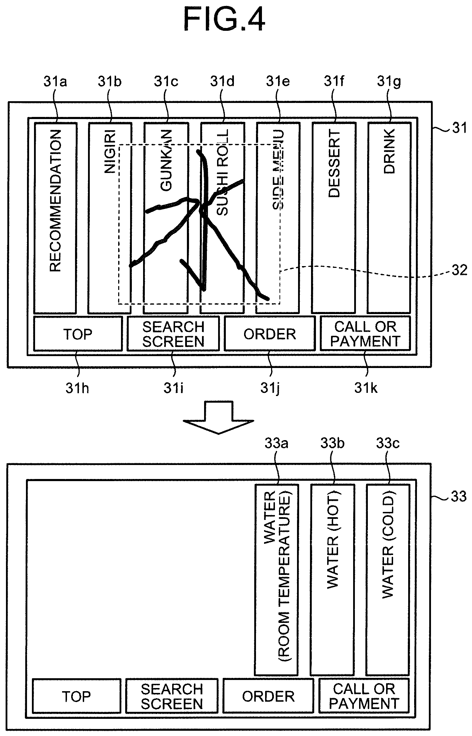

Next, by use of FIG. 4 to FIG. 9, screen transition according to a handwritten input will be described. FIG. 4 is a diagram illustrating an example of the screen transition according to a handwritten input.
The example of FIG. 4 illustrates a case where the character, "mizu", has been input by handwriting over the whole screen, with respect to a menu screen 31 listing thereon menu items of the uppermost hierarchical layer of menus of a sushi restaurant. The menu screen 31 has thereon items 31a to 31k as the menu items of the uppermost hierarchical layer. Each of the items 31a to 31g has menu items in a lower hierarchical layer thereof. Further, the item 31h is an item for return to a TOP screen, that is, the menu screen 31, and the item 31i is an item for transition to a search screen not illustrated. Furthermore, the item 31j is an item for confirmation of an order, and the item 31k is an item for when a worker is called or payment of a bill is carried out. The items 31i to 31k may be said to be buttons having these respective functions.

In the example of FIG. 4, since an input area 32 where the character, "mizu", has been input by handwriting is in a state where a single character has been input over the plural items 31c, 31d, and 31e; the determination unit 16 determines that "mizu" has been input in a non-associated area. The use control unit 17 outputs a search instruction to the search unit 18 for a search for "water" corresponding to the input character, with the non-associated area, that is, the items 31a to 31g that are the respective menu items on the menu screen currently being displayed, being a referent. When the search unit 18 receives "water (room temperature)", "water (hot)", and "water (cold)", as results of the search from the server device 100, the search unit 18 updates the menu screen 31 being displayed on the display operation unit 12 to a menu screen 33 displaying thereon the search results. An item 33a corresponding to "water (room temperature)", an item 33b corresponding to "water (hot)", and an item 33c corresponding to "water (cold)", which are the search results, are displayed on the menu screen 33.

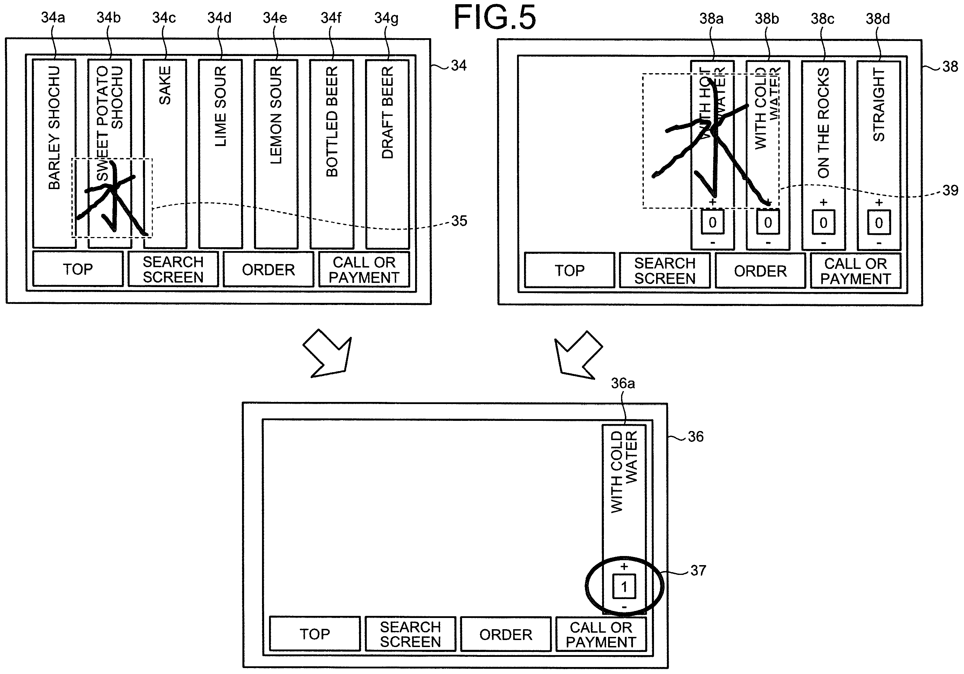

FIG. 5 is a diagram illustrating another example of the screen transition according to a handwritten input. The example in FIG. 5 illustrates a case where the character, "mizu", has been input by handwriting on an item on a menu screen 34 listing thereon menu items of a hierarchical layer of a category, "alcohol", of drinks. The menu screen 34 has thereon items 34a to 34g as the menu items of the hierarchical layer of that drink category. In the example of FIG. 5, since an input area 35 where the character, "mizu", has been input by handwriting is in a state where a single character has been input on the item 34b, the determination unit 16 determines that "mizu" in the input area 35 has been input in an associated area of the item 34b. It is assumed here that the item 34b is, for example, sweet potato shochu.

The use control unit 17 outputs a search instruction to the search unit 18, for a search for "water" corresponding to the input character, with sweet potato shochu of the item 34b being a referent. When the search unit 18 receives "with cold water" as a result of the search from the server device 100, the search unit 18 updates the menu screen 34 being displayed on the display operation unit 12 to a menu screen 36 displaying thereon the search result. On the menu screen 36, an item 36a corresponding to "with cold water", which is the search result, is displayed, and the number of ordered servings is displayed in a lower area 37 of the item 36a. On the menu screen 36, for example, "1" is input as the default number of ordered servings. In the above example, the server device 100 transmits "with cold water" including "water" from options for ways of drinking corresponding to sweet potato shochu, as the search result, to the search unit 18 of the terminal device 10. The server device 100 determines that "water" corresponds to way of drinking, of attributes of menu items, for example, way of drinking, number of ordered servings, brand, and the like; and determines "with cold water" including "water", from the options for ways of drinking, as the search result.

Further, a menu screen 38 illustrated in FIG. 5 is a menu screen displayed when, for example, "sweet potato shochu" of the item 34b has been selected on the menu screen 34. On the menu screen 38, the options for ways of drinking for "sweet potato shochu" are displayed as items 38a to 38d. In the example of FIG. 5, since an input area 39 where the character, "mizu", has been input by handwriting is in a state where a single character has been input over the items 38a and 38b, the determination unit 16 determines that "mizu" in the input area 39 has been input in a non-associated area. The use control unit 17 outputs a search instruction to the search unit 18, for a search for "water" corresponding to the input character, with the non-associated area, that is, the items 38a to 38d that are the respective menu items on the menu screen 38 currently being displayed, being a referent. When the search unit 18 receives "with cold water" as a result of the search from the server device 100, the search unit 18 updates the menu screen 38 being displayed on the display operation unit 12 to a menu screen 36 displaying thereon the search result. That is, at the terminal device 10, whether "mizu" is input on the item 34b of "sweet potato shochu" on the menu screen 34, or "mizu" is input over the whole menu screen 38 listing thereon the ways of drinking for "sweet potato shochu"; by input of one time, the menu screen 36 for "with cold water" is able to be displayed.

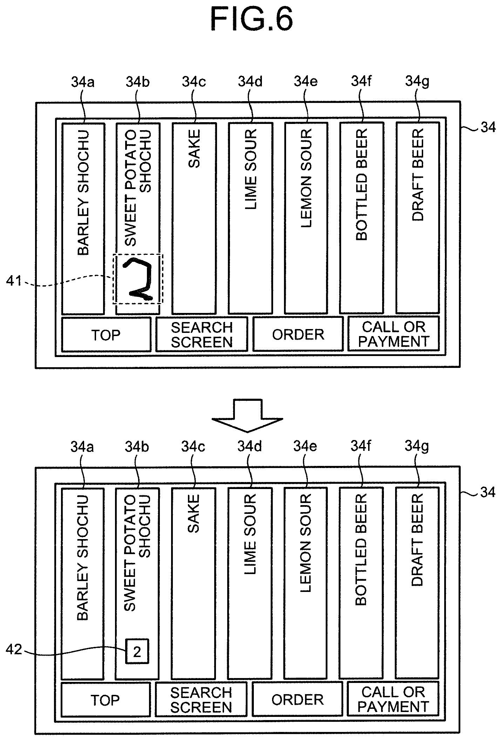

FIG. 6 is a diagram illustrating another example of the screen transition according to a handwritten input. The menu screen 34 illustrated in FIG. 6 is the same screen as the menu screen 34 illustrated in FIG. 5, but has thereon a character, "2", that has been input by handwriting, instead of "mizu". On the menu screen 34 in FIG. 6, since an input area 41 where the character, "2", has been input by handwriting is in a state where a single character has been input on the item 34b, the determination unit 16 determines that "2" in the input area 41 has been input in an associated area of the item 34b.

The use control unit 17 outputs a search instruction to the search unit 18, for a search for "2" corresponding to the input character, with sweet potato shochu of the item 34b being a referent. When the search unit 18 receives that the number of ordered servings is two, as a result of the search, from the server device 100, the search unit 18 updates the menu screen 34, for "2" to be displayed thereon as the number of ordered servings 42 in the item 34b on the menu screen 34 being displayed on the display operation unit 12. That is, the use control unit 17 is able to change a reference method for an attribute of a specific element, according to a classification of contents of a handwritten input.

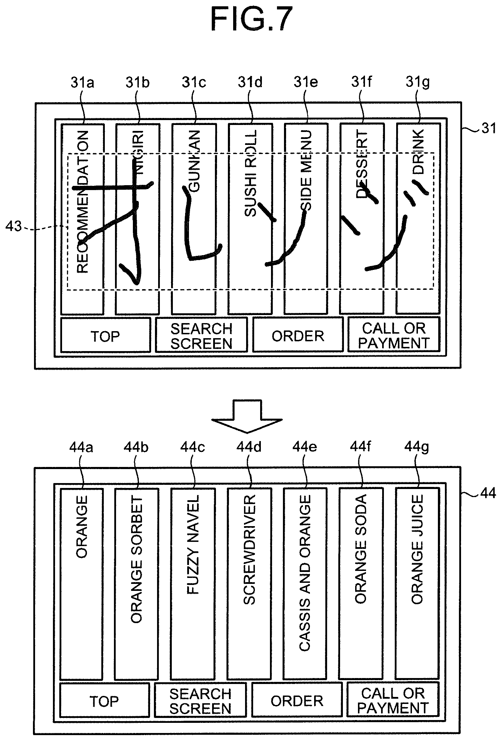

FIG. 7 is a diagram illustrating another example of the screen transition according to a handwritten input. The menu screen 31 illustrated in FIG. 7 is the same screen as the menu screen 31 illustrated in FIG. 4, but has thereon characters, "orenji" (four Japanese katakana characters meaning "orange" in Japanese), which have been input by handwriting, instead of "mizu". On the menu screen 31 in FIG. 7, since an input area 43 where "orenji" has been input is in a state where four characters have been input over the items 31a to 31g, the determination unit 16 determines that "orenji" in the input area 43 has been input in a non-associated area.

The use control unit 17 outputs a search instruction to the search unit 18, for a search for "orange" corresponding to the input characters, with the non-associated area, that is, the items 31a to 31g that are the respective menu items on the menu screen 31 currently being displayed, being a referent. The search unit 18 receives, as results of the search, "orange", "orange sorbet", "Fuzzy Navel", "Screwdriver", "Cassis and Orange", "orange soda", and "orange juice", from the server device 100. The search unit 18 updates the menu screen 31 being displayed on the display operation unit 12 to a menu screen 44 displaying thereon from "orange" of an item 44a to "orange juice" of an item 44g, which correspond to the received search results. That is, at the terminal device 10, when "orenji" is input on the menu screen 31, the menu screen 44 having thereon "orange" included in "dessert", and in "soft drink" and "alcohol" that are in a lower hierarchical layer of "drink" is displayed.

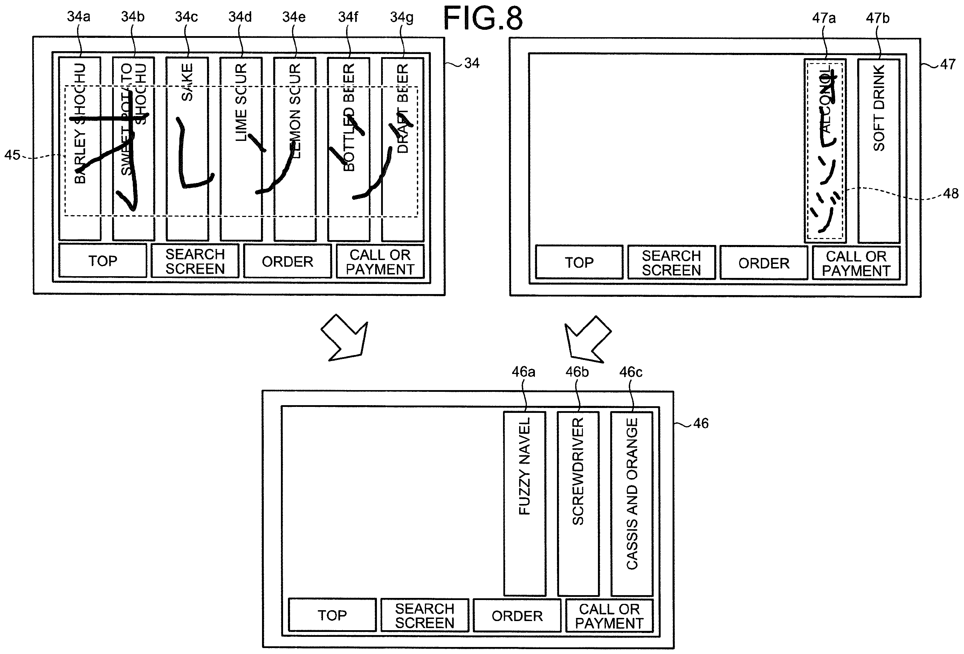

FIG. 8 is a diagram illustrating another example of the screen transition according to a handwritten input. The example in FIG. 8 illustrates a case where the characters, "orenji", have been input by handwriting over the whole screen on the menu screen 34 listing thereon the menu items of the hierarchical layer of the category, "alcohol", of drinks. The menu screen 34 illustrated in FIG. 8 is the same as the menu screen 34 illustrated in FIG. 5. In the example of FIG. 8, since an input area 45 where the characters, "orenji", have been input by handwriting is in a state where the characters have been input over the items 34a to 34g, the determination unit 16 determines that "orenji" in the input area 45 has been input in a non-associated area.

The use control unit 17 outputs a search instruction to the search unit 18, for a search for "orange" corresponding to the input characters, with the non-associated area, that is, the items 34a to 34g that are the respective menu items on the menu screen 34 currently being displayed, being a referent. The search unit 18 receives, as results of the search, "Fuzzy Navel", "Screwdriver", and "Cassis and Orange", from the server device 100. The search unit 18 updates the menu screen 34 being displayed on the display operation unit 12 to a menu screen 46 displaying thereon "Fuzzy Navel" of an item 46a, "Screwdriver" of an item 46b, and "Cassis and Orange" of an item 46c, which correspond to the received search results.

Further, a menu screen 47 illustrated in FIG. 8 is, for example, a menu screen that is displayed when "drink" of the item 31g on the menu screen 31 has been selected. Displayed on the menu screen 47 are "alcohol" of an item 47a, and "soft drink" of an item 47b, as categories lower than "drink". In the example of FIG. 8, since an input area 48 where the characters, "orenji", have been input by handwriting is in a state where a width of one character is less than a width of the item 47a and the characters have been input on the item 47a by vertical writing, the determination unit 16 determines that "orenji" in the input area 48 has been input in an associated area of the item 47a.

The use control unit 17 outputs a search instruction to the search unit 18, for a search for "orange" corresponding to the input characters, with the associated area, that is, "alcohol" of the item 47a, being a referent. The search unit 18 receives, as results of the search, "Fuzzy Navel", "Screwdriver", and "Cassis and Orange", from the server device 100. The search unit 18 updates the menu screen 47 being displayed on the display operation unit 12 to a menu screen 46 displaying thereon "Fuzzy Navel" of the item 46a, "Screwdriver" of the item 46b, and "Cassis and Orange" of the item 46c, which correspond to the received search results. That is, whether "orenji" is input over the whole screen of the menu screen 34 listing thereon categories of alcohol, or "orenji" is input on the item 47a for "alcohol" on the menu screen 47 for "drink", the menu screen 46 is able to be displayed by input of one time. The menu screen 46 has thereon menu items including "orange" belonging to "alcohol". In other words, based on a choice corresponding to an attribute of a menu screen, the terminal device 10 updates the menu screen. That is, the terminal device 10 displays menu screens according to hierarchy of the menus.

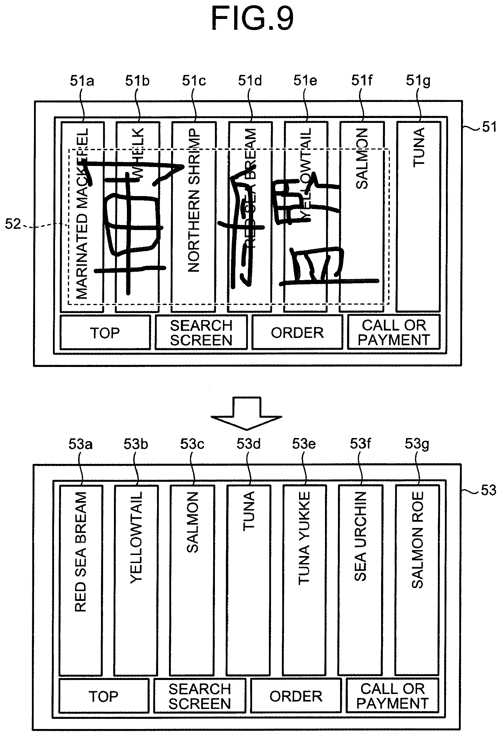

FIG. 9 is a diagram illustrating another example of the screen transition according to a handwritten input. FIG. 9 is an example, in which a menu screen 53 is obtained by: an OR search through search results based on input characters input by handwriting; and addition of menu items to a menu screen 51 being displayed. The menu screen 51 is a menu screen displayed when, for example, "nigiri" (hand-formed sushi) of the item 31b on the menu screen 31 illustrated in FIG. 7 has been selected. The menu screen 51 has thereon "gunkan" (two Chinese characters meaning "warship-roll sushi" in Japanese) input by handwriting over the whole screen. On the menu screen 51, since an input area 52 where the characters, "gunkan", have been input by handwriting is in a state where two characters have been input over items 51a to 51f, the determination unit 16 determines that "gunkan" in the input area 52 has been input in a non-associated area.

The use control unit 17 outputs a search instruction to the search unit 18, for an OR search for merchandise items with a referent and the input category, "gunkan", the referent being the non-associated area, that is, the items 51a to 51g that are the respective menu items on the menu screen 51 currently being displayed. The search unit 18 receives, as results of the search, "red sea bream" of an item 53a, "yellowtail" of an item 53b, "salmon" of an item 53c, and "tuna" of an item 53d, which are included in the category, "nigiri", from the server device 100. Further, the search unit 18 receives, as results of the search, "tuna-yukke" (tuna and egg mixed together with a spicy Korean sauce) of an item 53e, "sea urchin" of an item 53f, and "salmon roe" of an item 53g, which are included in the category, "gunkan", from the server device 100. The search unit 18 updates the menu screen 51 being displayed on the display operation unit 12 to a menu screen 53 displaying thereon from "red sea bream" of the item 53a to "salmon roe" of the item 53g, which correspond to the received search results. That is, at the terminal device 10, when "gunkan" is input on the menu screen 51, the menu screen 53 having thereon the merchandise items included in the categories, "nigiri" and "gunkan", is displayed.

In other words, according to a way in which a keyword input on a menu screen is written, the terminal device 10 is able to change operation, such as customization of a menu. Further, the terminal device 10 is able to execute a search by taking over context of a selected menu item. For example, if "on the rocks" is input on a menu screen for "sweet potato shochu", the terminal device 10 executes an AND search for "sweet potato shochu" and "on the rocks". Furthermore, if, for example, "white" is input on a menu screen for "mini-van", the terminal device 10 executes an AND search for "mini-van" and "white". Moreover, if "katsu" (meaning "deep-fried breaded meat" in Japanese) is input on a menu screen for "curry", the terminal device 10 is able to add information for topping "curry" with "katsu". What is more, the terminal device 10 may execute a search by, for example, increasing priority of contents of a handwritten input. In addition, the terminal device 10 may change operation by using information on a size of an input keyword or input order.

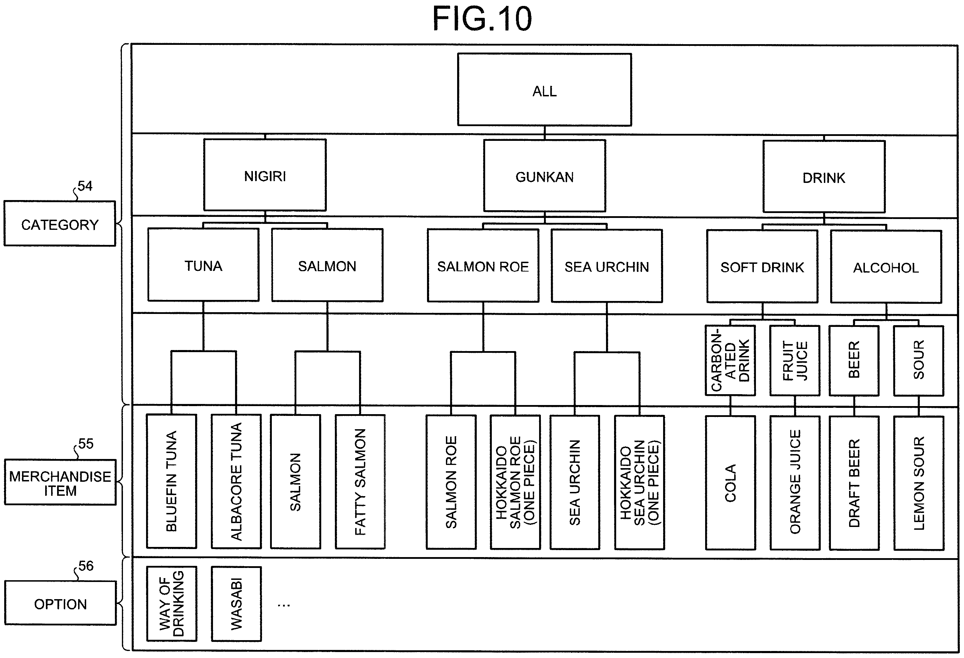

Next, by use of FIG. 10, an example of a structure of menu items, which are referents for categories, merchandise items, and options, will be described. FIG. 10 is a diagram illustrating the example of the structure of the menu items. In the description of FIG. 10, it is assumed that the menu items include categories, merchandise items, and options. In the example in FIG. 10, categories 54 have a category, "all", in the uppermost hierarchical layer, and three categories, "nigiri", "gunkan", and "drink", in a second hierarchical layer, as lower categories of the category, "all".

Further, the categories 54 have two categories, "tuna" and "salmon", under "nigiri", in a third hierarchical layer thereof. Furthermore, the categories 54 have two categories, "salmon roe" and "sea urchin", under "gunkan", in the third hierarchical layer. Moreover, the categories 54 have two categories, "soft drink" and "alcohol", under "drink", in the third hierarchical layer. What is more, the categories 54 have two categories, "carbonated drink" and "fruit juice", under "soft drink", in a fourth hierarchical layer thereof. In addition, the categories 54 have "beer" and "sour" under "alcohol" in the fourth hierarchical layer. The numbers of hierarchical layers may be different from one another among categories, like those of "gunkan" and "drink", in the categories 54.

In the example of FIG. 10, merchandise items 55 correspond to menus, from which an order is able to be made, and the merchandise items 55 are respectively associated with the higher categories 54. In the example of FIG. 10, the category, "tuna", has two merchandise items, "bluefin tuna", and "albacore tuna". Further, the category, "salmon", has two merchandise items, "salmon" and "fatty salmon". Furthermore, the category, "salmon roe", has two merchandise items, "salmon roe" and "Hokkaido salmon roe (one piece)". Moreover, the category, "sea urchin", has two merchandise items, "sea urchin" and "Hokkaido sea urchin (one piece)". What is more, the category, "carbonated drink", has one merchandise item, "cola". In addition, the category, "fruit juice", has one merchandise item, "orange juice". Further, the category, "beer", has one merchandise item, "draft beer". Furthermore, the category, "sour", has one merchandise item, "lemon sour".

In the example of FIG. 10, options 56 indicate options added to the merchandise items, and for example, an option, "wasabi" (Japanese horseradish), is able to be added to the merchandise items belonging to the category, "nigiri". Further, for example, an option, "way of drinking", is able to be added to merchandise items belonging to a category, "shochu", which has been omitted from the categories 54. The option, "way of drinking", may further have options, including "straight", "on the rocks", "with cold water", and "with hot water", as a hierarchical structure. Based on the structure of the menu items in FIG. 10, for example, the use control unit 17 generates a search instruction, such that a referent to be searched differs according to whether contents of a handwritten input are a category name, a merchandise item name, or an option name, and according to an input area thereof.

Returning to the description of FIG. 1, a configuration of the server device 100 will be described, next. As illustrated in FIG. 1, the server device 100 has a communication unit 110, a storage unit 120, and a control unit 130. The server device 100 may have, in addition to the functional units illustrated in FIG. 1, various functional units that a known computer has, for example, functional units, such as various input devices and a sound output device.

The communication unit 110 is realized by, for example, an NIC or the like. The communication unit 110 is a communication interface, which is connected to the terminal device 10 via the network N wiredly or wirelessly, and which controls communication of information to and from the terminal device 10. The communication unit 110 receives various types of information, such as a search request, order information, and the like, from the terminal device 10. The communication unit 110 outputs the received various types of information, such as the search request, order information, and the like, to the control unit 130. Further, the communication unit 110 transmits data of various menu screens, such as menu screens according to the search request, order information, and the like, which have been input from the control unit 130, to the terminal device 10.

The storage unit 120 is realized by, for example: a semiconductor memory element, such as a RAM or a flash memory; and a storage device, such as a hard disk or an optical disk. The storage unit 120 has a classification DB 121, a category DB 122, a merchandise item DB 123, a material DB 124, an option DB 125, a screen display DB 126, and an order DB 127. The respective DBs from the classification DB 121 to the order DB 127 are, for example, an example of a composition of the menu DB of the restaurant. Further, the storage unit 120 stores therein information used in processing at the control unit 130.

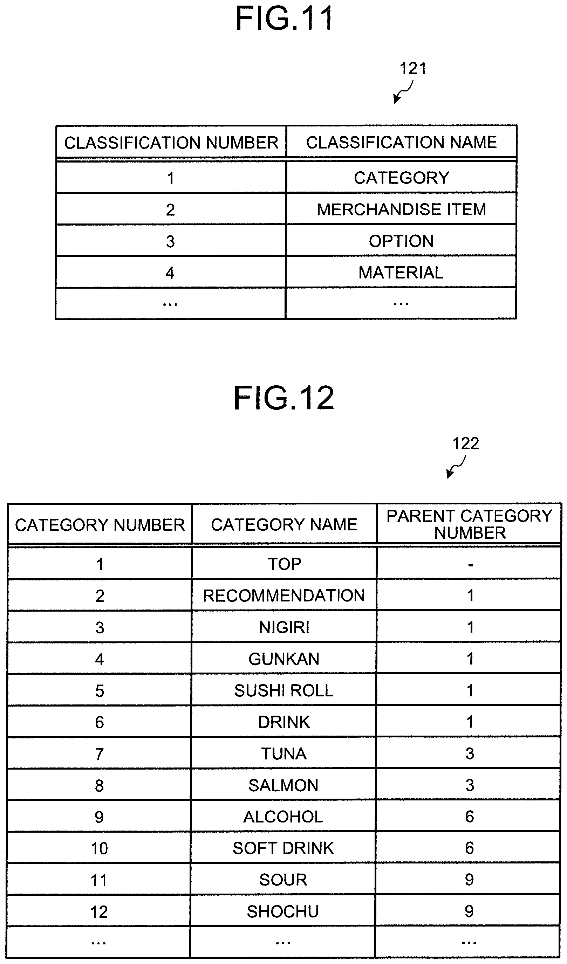

The classification DB 121 stores therein classifications of menu items. FIG. 11 is a diagram illustrating an example of the classification DB. As illustrated in FIG. 11, the classification DB 121 has items, including "classification number" and "classification name". The classification DB 121 stores therein, for example, one record for each classification name.

"Classification number" is an identifier that identifies a classification of a menu item.
"Classification name" is information indicating a classification name of the menu item. The example of FIG. 11 illustrates that a classification number, "1", corresponds to a classification name, "category".

Returning to the description of FIG. 1, category names are stored in association with parent category numbers, in the category DB 122. FIG. 12 is a diagram illustrating an example of the category DB. As illustrated in FIG. 12, the category DB 122 has therein items including "category number", "category name", and "parent category number". The category DB 122 stores therein, for example, one record for each category name.

"Category number" is an identifier that identifies a category of a menu item. "Category name" is information indicating a category name of the menu item. "Parent category number" is information indicating a category number of an upper hierarchical layer that the category belongs to. The example in FIG. 12 illustrates that a category name, "nigiri", of a category number, "3", is a category of an upper hierarchical layer of a category name, "tuna", of a category number, "7", since a parent category number thereof is "3".

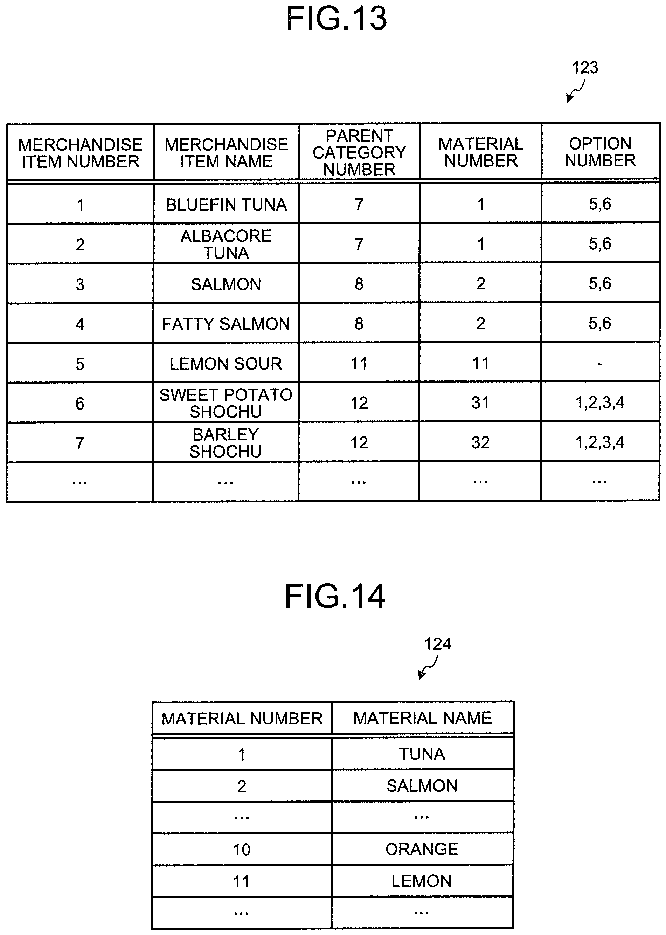

Returning to the description of FIG. 1, category names are stored in association with parent category numbers, material numbers, and option numbers, in the merchandise item DB 123. FIG. 13 is a diagram illustrating an example of the merchandise item DB. As illustrated in FIG. 13, the merchandise item DB 123 has therein items including "merchandise item number", "merchandise item name", "parent category number", "material number", and "option number". The merchandise item DB 123 stores therein, for example, one record for each merchandise item name.

"Merchandise item number" is an identifier that identifies a merchandise item of a menu item. "Merchandise item name" is information indicating a merchandise item name of the menu item. "Parent category number" is information indicating a category number of an upper hierarchical layer that the merchandise item belongs to. "Material number" is information indicating a number corresponding to a material of the merchandise item. "Option number" is information indicating a number of an option corresponding to the merchandise item. The example in FIG. 13 illustrates that a category name, "tuna", having a parent category number, "7", is an upper hierarchical layer category of a merchandise item name, "bluefin tuna", having a merchandise item number, "1", and "tuna" having a material number, "1", is a material of "bluefin tuna". Further, the example illustrates that for the merchandise item name, "bluefin tuna", of the merchandise item number, "1", "with wasabi" of an option number, "5", or "without wasabi" of an option number, "6", is selectable.

Returning to the description of FIG. 1, the material DB 124 stores therein materials of merchandise items. FIG. 14 is a diagram illustrating an example of the material DB. As illustrated in FIG. 14, the material DB 124 has items including "material number" and "material name". The material DB 124 stores therein, for example, one record for each material name.

"Material number" is an identifier that identifies a material. "Material name" is information indicating a name of the material used in a merchandise item. The example of FIG. 14 illustrates that a material name, "tuna", is used in a merchandise item having a material number, "1".

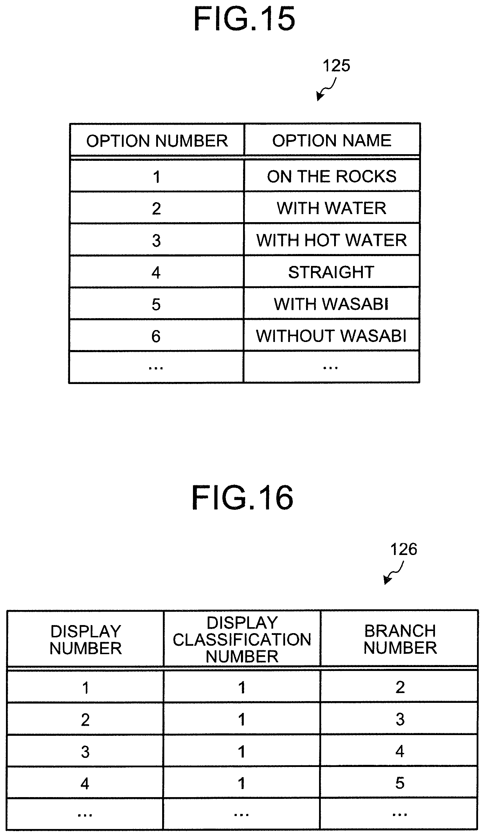

Returning to the description of FIG. 1, the option DB 125 stores therein options corresponding to merchandise items. FIG. 15 is a diagram illustrating an example of the option DB. As illustrated in FIG. 15, the option DB 125 has therein items including "option number" and "option name". The option DB 125 stores therein, for example, one record for each option name.

"Option number" is an identifier that identifies an option. "Option name" is information indicating an option name corresponding to a merchandise item. The example in FIG. 15 illustrates that options having option names, "on the rocks", "with cold water", "with hot water", and "straight", are able to be selected for merchandise items having option numbers, "1", "2", "3", and "4".

Returning to the description of FIG. 1, the screen display DB 126 stores therein menu items of a menu screen to be displayed on the terminal device 10 in association with display classifications and branch numbers. FIG. 16 is a diagram illustrating an example of the screen display DB. As illustrated in FIG. 16, the screen display DB 126 has therein items including "display number", "display classification number", and "branch number". The screen display DB 126 stores therein, for example, one record for one display number, that is, for each menu item to be displayed.

"Display number" is an identifier that identifies a menu item to be displayed on the menu screen. "Display classification number" is information indicating a classification of the menu item to be displayed on the menu screen. "Branch number" is information indicating a number in a DB corresponding to the classification of the menu item. In the example of FIG. 16, for a menu item having a display number, "1", a classification name, "category", is obtained, by the classification DB 121 being referred to according to a display classification number thereof, "1". Further, for the menu item having the display number, "1", "recommendation" corresponding to a branch number, "2", is displayed, by the category DB 122 being referred to according to the obtained classification name, "category".

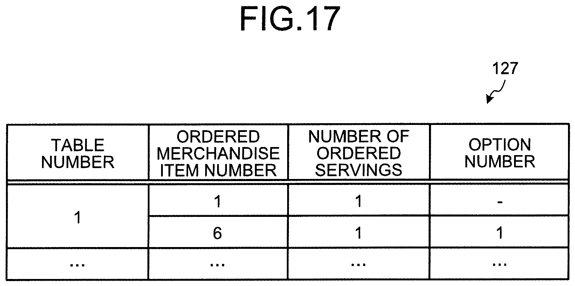

Returning to the description of FIG. 1, the order DB 127 stores therein an order of a user who operates the terminal device 10. FIG. 17 is a diagram illustrating an example of the order DB. As illustrated in FIG. 17, the order DB 127 has therein items including "table number", "ordered merchandise item number", "number of ordered servings", and "option number". The order DB 127 stores therein, for example, one record for each ordered merchandise item number.

"Table number" is an identifier that identifies a user of a table where the terminal device 10 is installed. "Ordered merchandise item number" is information indicating a merchandise item number of a merchandise item that has been ordered. "Number of ordered servings" is information indicating the number of ordered servings of the merchandise item. When there is an option corresponding to the merchandise item that has been ordered, "option number" is information indicating a number of the option specified by the user. The example in FIG. 17 illustrates that a user of a table number, "1", has ordered "1" serving of "bluefin tuna", having the merchandise item number, "1", and "1" serving of "sweet potato shochu" having a merchandise item number, "6", "on the rocks" correspondingly to the option number, "1".

Returning to the description of FIG. 1, the control unit 130 is realized by, for example, a program stored in a storage device inside thereof being executed by a CPU, an MPU, or the like, with a RAM being a work area. Further, the control unit 130 may be realized by, for example, an integrated circuit, such as an ASIC or FPGA. The control unit 130 has a DB management unit 131, and realizes or executes functions and effects of information processing described below. The internal configuration of the control unit 130 is not limited to the configuration illustrated in FIG. 1, and may be any other configuration as long as the control unit 130 is configured to perform the later described information processing.

The DB management unit 131 executes management of the respective DBs from the classification DB 121 to the order DB 127, and provides various menu screens to the terminal device 10. Based on information on the respective DBs from the classification DB 121 to the order DB 127, the DB management unit 131 generates data of the various menu screens, and transmits the generated data of the various menu screens to the terminal device 10 via the communication unit 110 and the network N. The DB management unit 131 transmits, for example, data of the menu screen 31 illustrated in FIG. 4, as an initial screen, to the terminal device 10.

Further, the DB management unit 131 receives various types of information including a search request and order information, from the terminal device 10, via the network N and the communication unit 110. Based on the received search request, the DB management unit 131 searches a corresponding DB of the respective DBs from the classification DB 121 to the order DB 127, and transmits data of a menu screen based on results of the search, to the terminal device 10, via the communication unit 110 and the network N. Furthermore, the DB management unit 131 stores the received order information into the order DB 127, and transmits data of a menu screen reflecting the order information, to the terminal device 10, via the communication unit 110 and the network N. Moreover, the DB management unit 131 delivers an order to a worker of the restaurant by causing an order display device not illustrated to display thereon the received order information.

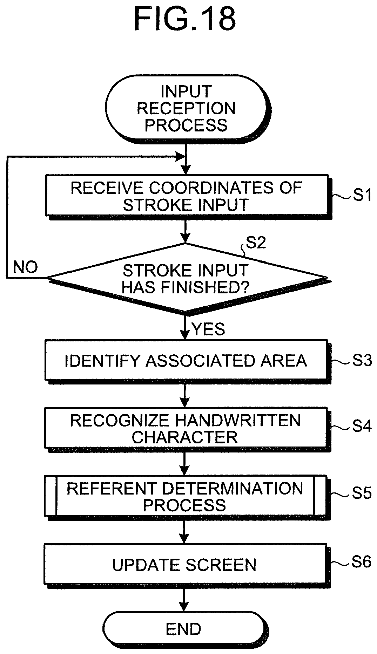

Next, operation of the information processing system 1 of the embodiment will be described. FIG. 18 is a flow chart illustrating an example of an input reception process of the embodiment.

The reception unit 15 of the terminal device 10 receives operation information, for example, coordinates of stroke input, from the display operation unit 12 (Step S1). Based on the coordinates of the stroke input, the reception unit 15 determines whether or not the stroke input has finished (Step S2). If the stroke input has not finished (Step S2: No), the reception unit 15 returns to Step S1.
If the stroke input has finished (Step S2: Yes), the reception unit 15 outputs the received coordinates of the stroke input to the determination unit 16.

When the coordinates of the stroke input are input from the reception unit 15, the determination unit 16 determines whether or not the stroke input is an input associated with a specific element displayed in the display screen being displayed on the display operation unit 12.
If the stroke input is an input associated with any of the menu items, the determination unit 16 outputs associated area information added with attribute information of that menu item, to the use control unit 17. If the stroke input is not an input associated with any of the menu items, the determination unit 16 outputs non-associated area information not added with attribute information of a menu item, to the use control unit 17. That is, the determination unit 16 identifies an associated area (Step S3). Further, based on the coordinates of the stroke input, the reception unit 15 recognizes handwritten characters (Step S4), and generates contents of the handwritten input. The reception unit 15 outputs the generated contents of the handwritten input to the use control unit 17.

When the associated area information or the non-associated area information is input from the determination unit 16, and the contents of the handwritten input are input from the reception unit 15; the use control unit 17 executes the referent determination process (Step S5). According to a result of the referent determination process, the use control unit 17 updates the display screen being displayed on the display operation unit 12 to a display screen displaying thereon results of a search. That is, according to the referent determination process, the use control unit 17 updates the menu screen being displayed on the display operation unit 12 (Step S6). Thereby, the terminal device 10 enables smooth operation associated with a specific element.

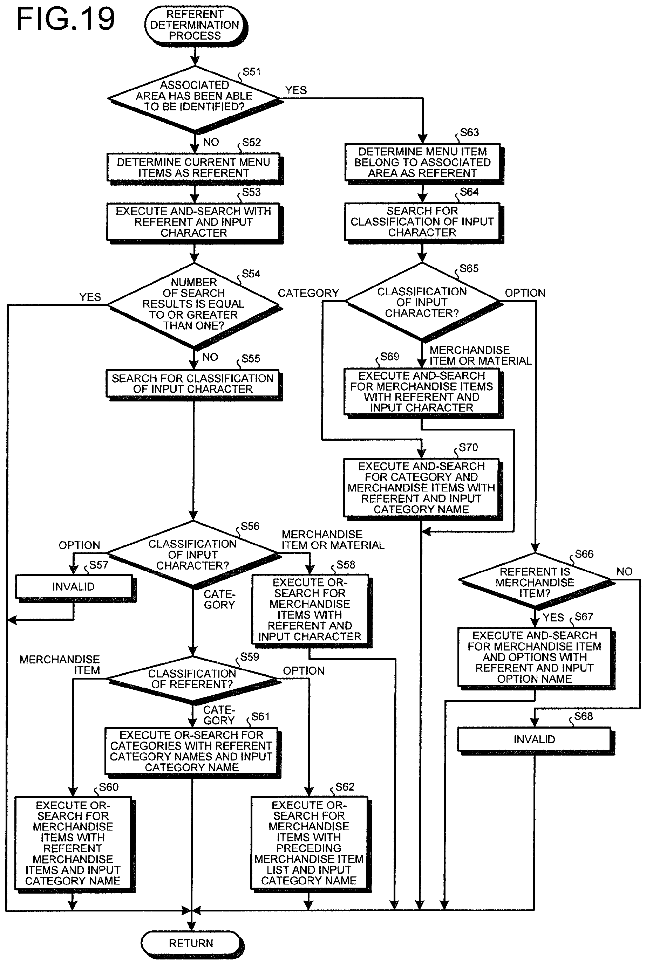

By use of FIG. 19, the referent determination process will now be described. FIG. 19 is a flow chart illustrating an example of the referent determination process. Based on the input of the associated area information or the non-associated area information, the use control unit 17 determines whether or not an associated area has been able to be identified (Step S51). If an associated area has not been able to be identified, that is, if the non-associated area information has been input (Step S51: No), the use control unit 17 determines the respective menu items on the display screen currently being displayed, as a referent (Step S52).

The use control unit 17 outputs a search instruction to the search unit 18 for an AND search with the referent and input characters corresponding to the contents of the handwritten input (Step S53). When the search instruction is input from the use control unit 17, the search unit 18 generates a search instruction, based on the search instruction. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100. The search unit 18 outputs the received search results to the use control unit 17. When the search results are input from the search unit 18, the use control unit 17 determines whether the number of the search results is equal to or greater than one (Step S54). If the number of the search results is equal to or greater than one (Step S54: Yes), the use control unit 17 ends the referent determination process, and updates the menu screen.

If the number of the search results is not equal to or greater than one (Step S54: No), the use control unit 17 outputs a search instruction to the search unit 18 for a search for a classification of the input characters corresponding to the contents of the handwritten input (Step S55). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits a result of the search through the DB, to the terminal device 10.

The search unit 18 of the terminal device 10 receives the search result from the server device 100. The search unit 18 outputs the received search result to the use control unit 17. When the search result is input from the search unit 18, the use control unit 17 determines which one of option, merchandise item or material, and category, the classification of the input characters, which is the search result, is (Step S56). If the classification of the input characters is option (Step S56: Option), the use control unit 17 determines the input with respect to the respective menu items being displayed is invalid (Step S57) and ends the referent determination process.

If the classification of the input characters is merchandise item or material (Step S56: Merchandise item or material), the use control unit 17 outputs a search instruction to the search unit 18 for execution of an OR search for merchandise items with the referent and the input characters (Step S58). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100. The search unit 18 outputs the received search results to the use control unit 17. When the search results are input from the search unit 18, the use control unit 17 ends the referent determination process, and updates the menu screen.

If the classification of the input characters is category (Step S56: Category), the use control unit 17 determines a classification of the current menu items that are the referent (Step S59). If the classification of the referent is merchandise item (Step S59: Merchandise item), the use control unit 17 outputs a search instruction to the search unit 18 for execution of an OR search for merchandise items with the merchandise items of the referent and the input category name (Step S60). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100. The search unit 18 outputs the received search results to the use control unit 17. When the search results are input from the search unit 18, the use control unit 17 ends the referent determination process, and updates the menu screen.

If the classification of the referent is category (Step S59: Category), the use control unit 17 outputs a search instruction to the search unit 18 for execution of an OR search for categories with the category names of the referent and the input category name (Step S61). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100. The search unit 18 outputs the received search results to the use control unit 17. When the search results are input from the search unit 18, the use control unit 17 ends the referent determination process, and updates the menu screen.

If the classification of the referent is option (Step S59: Option), the use control unit 17 outputs a search instruction to the search unit 18 for execution of an OR search for merchandise items with the immediately preceding merchandise item list and the input category name (Step S62). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100. The search unit 18 outputs the received search results to the use control unit 17. When the search results are input from the search unit 18, the use control unit 17 ends the referent determination process, and updates the menu screen.

Returning to the description of Step S51, if an associated area has been able to be identified, that is, when associated area information has been input (Step S51: Yes), the use control unit 17 determines a menu item belonging to the associated area as a referent (Step S63). That is, the use control unit 17 determines menu items of a hierarchical layer lower than that of the menu item of the associated area as the referent. The use control unit 17 outputs, with respect to the referent, a search instruction to the search unit 18 for a search for a classification of input characters corresponding to contents of the handwritten input (Step S64).

When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits a result of the search through the DB, to the terminal device 10.

The search unit 18 of the terminal device 10 receives the search result from the server device 100. The search unit 18 outputs the received search result to the use control unit 17. When the search result is input from the search unit 18, the use control unit 17 determines which one of option, merchandise item or material, and category, the classification of the input characters, which is the search result, is (Step S65).

If the classification of the input characters is option (Step S65: Option), the use control unit 17 determines whether or not the referent is a merchandise item (Step S66). If the referent is a merchandise item (Step S66: Yes), the use control unit 17 outputs a search instruction to the search unit 18 for execution of an AND search for the merchandise item and options with the referent and the input option name (Step S67).

When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100. The search unit 18 outputs the received search results to the use control unit 17. When the search results are input from the search unit 18, the use control unit 17 ends the referent determination process, and updates the menu screen.

If the referent is not a merchandise item (Step S66: No), the use control unit 17 determines that the input with respect to the respective menu items being displayed is invalid (Step S68) and ends the referent determination process.

If the classification of the input characters is merchandise item or material (Step S65: Merchandise item or material), the use control unit 17 outputs a search instruction to the search unit 18 for execution of an AND search for merchandise items with the referent and the input characters (Step S69). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100.
The search unit 18 outputs the received search results to the use control unit 17. When the search results are input from the search unit 18, the use control unit 17 ends the referent determination process, and updates the menu screen.

If the classification of the input characters is category (Step S65: Category), the use control unit 17 outputs a search instruction to the search unit 18 for execution of an AND search for categories and merchandise items with the referent and the input category name (Step S70). When the search instruction is input from the use control unit 17, the search unit 18 generates, based on the search instruction, a search request. The search unit 18 transmits the generated search request to the server device 100. When the DB management unit 131 of the server device 100 receives the search request from the terminal device 10, the DB management unit 131 searches, based on the received search request, a corresponding DB of the respective DBs from the classification DB 121 to the order DB 127. The DB management unit 131 transmits results of the search through the DB, to the terminal device 10.

The search unit 18 of the terminal device 10 receives the search results from the server device 100.
The search unit 18 outputs the received search results to the use control unit 17. When the search results are input from the search unit 18, the use control unit 17 ends the referent determination process, and updates the menu screen. Thereby, the terminal device 10 is able to determine a referent DB, obtain results of a search through the determined referent DB, and update a menu screen. That is, since the terminal device 10 is able to search for similar merchandise items belonging to plural categories according to a screen being operated, a user is able to easily search for a desired merchandise item.

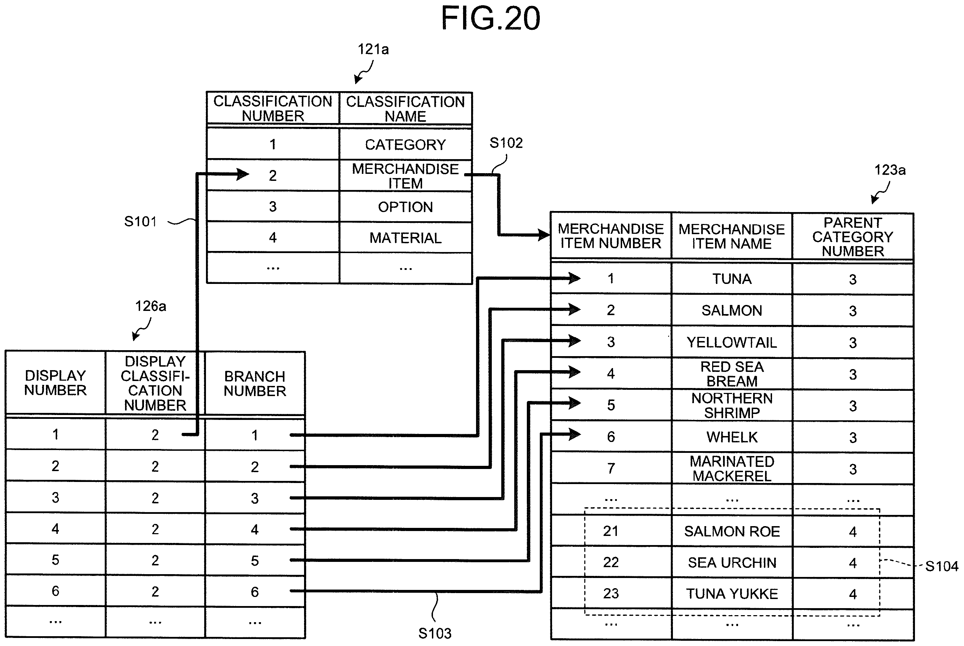

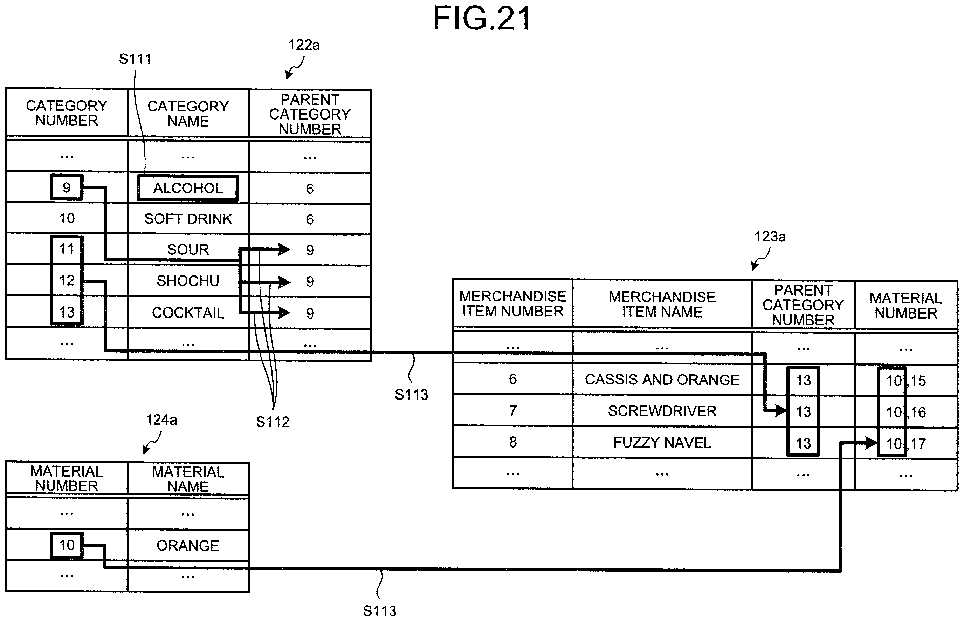

Next, by use of FIG. 20 and FIG. 21, reference to the respective DBs of the server device 100 will be described. FIG. 20 is a diagram illustrating an example of the reference to the respective DBs in the referent determination process. With respect to the example in FIG. 20, a case where "gunkan" has been input by handwriting on the menu screen 51 illustrated in FIG. 9, will be described. Firstly, the use control unit 17 of the terminal device 10 outputs a search instruction to the search unit 18 for an OR search for merchandise items with a referent and the input category, "gunkan", the referent being the respective menu items on the menu screen 51. The search unit 18 transmits a search request based on the input search instruction, to the server device 100.

Based on the received search request, the DB management unit 131 of the server device 100 refers to a screen display DB 126a, and obtains a display classification number, "2", of the menu items on the menu screen 51 being displayed. Based on the obtained display classification number, "2", the DB management unit 131 refers to a classification DB 121a (Step S101), and obtains that the classification is "merchandise item". Based on the classification, "merchandise item", the DB management unit 131 determines a merchandise item DB 123a as a DB to be referred to (Step S102). The DB management unit 131 refers to the screen display DB 126a and the merchandise item DB 123a, and obtains merchandise item names of merchandise item numbers corresponding to branch numbers, as merchandise item names being displayed on the menu screen 51 (Step S103).

Further, the DB management unit 131 obtains merchandise item names having a parent category number, "4", corresponding to the category, "gunkan", that is, merchandise item names, "salmon roe", "sea urchin", and "tuna yukke" in FIG. 20 (Step S104). That is, the DB management unit 131 obtains the merchandise item names by executing an OR search through the merchandise item DB 123a with the referent and the input category, "gunkan". Based on the obtained merchandise item names, the DB management unit 131 updates the menu screen, and transmits the updated menu screen to the terminal device 10. On the updated menu screen, for example, the newly retrieved "salmon roe", "sea urchin", and "tuna yukke" are displayed in place of a part of the previous menu items. Thereby, the terminal device 10 is able to display the results of the OR search for merchandise items with the menu items being displayed and the input category.

FIG. 21 is a diagram illustrating another example of the reference to the respective DBs in the referent determination process. With respect to the example in FIG. 21, a case where "orenji" has been input by handwriting on "alcohol" of the item 47a on the menu screen 47 illustrated in FIG. 8, will be described. Firstly, the use control unit 17 of the terminal device 10 outputs a search instruction to the search unit 18 for an AND search for merchandise items with a referent and the input merchandise item or material, "orange", the referent being "alcohol" of the item 47a on the menu screen 47. The search unit 18 transmits a search request based on the input search instruction, to the server device 100.

Based on the received search request, the DB management unit 131 of the server device 100 searches a category DB 122a with "alcohol" corresponding to the item 47a on the menu screen 47, and obtains a category number, "9", of "alcohol" (Step Sill). The DB management unit 131 searches the category DB 122a, and obtains category numbers, "11", "12" and "13", of "sour", "shochu", and "cocktail" that are categories having the obtained category number, "9", as their parent category number (Step S112). Further, the DB management unit 131 searches a material DB 124a with the input "orange", and obtains a material number, "10", of "orange".

The DB management unit 131 refers to the merchandise item DB 123a, and searches for merchandise items having any of the obtained category numbers, "11", "12", and "13", as their parent categories, and having the obtained material number, "10", as their material number (Step S113). That is, the DB management unit 131 obtains the merchandise item names by executing an AND search through the merchandise item DB 123a with the category numbers, "11", "12", and "13", that are the referent, and the input material, "orange". The DB management unit 131 obtains, "Cassis and Orange", "Screwdriver", and "Fuzzy Navel", as results of the search. Based on the obtained merchandise item names, the DB management unit 131 updates the menu screen, and transmits the updated menu screen to the terminal device 10. The updated menu screen is, for example, the menu screen 46 in FIG. 8. Thereby, the terminal device 10 is able to display the results of the AND search for merchandise items with the menu items that are the referent and the input merchandise item or material, "orange".

As described above, the terminal device 10 detects that handwritten input has been executed at an input position corresponding to a specific menu item of plural menu items displayed on a display screen. The terminal device 10 then uses input contents of the handwritten input in a process of narrowing down menu items of a lower layer of the specific menu item, or a process of receiving the input contents as contents of an instruction related to an order for the specific menu item. Further, the terminal device 10 displays a menu of a first hierarchical layer having a group of choices, of menus having a hierarchical structure. According to a handwritten input on a display screen of the menu of the first hierarchical layer, the terminal device 10 displays items of a hierarchical layer lower than the first hierarchical layer, the items related to the input contents of the handwritten input. As a result, freedom of operation in display of menus is able to be improved.

Further, according to a handwritten input on a display screen, the terminal device 10 determines whether or not the handwritten input is an input associated with a specific element displayed on the display screen.
Furthermore, if it is determined that the handwritten input is an input associated with a specific element displayed on the display screen, the terminal device 10 uses contents of the handwritten input, by a use method different from that in a case where the handwritten input is not determined to be an input associated with a specific element displayed on the display screen. As a result, operation associated with a specific element is able to be made smoothly.

Further, if it is determined that the handwritten input is an input associated with a specific element displayed on the display screen, the terminal device 10 uses the contents of the handwritten input, by referring to an attribute of the specific element. As a result, the number of screen transitions is able to be reduced.

Further, the terminal device 10 changes a reference method for the attribute of the specific element, according to a classification of the contents of the handwritten input. As a result, a screen according to the attribute of the specific element is able to be displayed, and thus the number of screen transitions is able to be reduced.

Further, if the handwritten input is an input with respect to a display screen displaying thereon plural choices, the terminal device 10 outputs, based on contents of the handwritten input, a search request for a search through alternatives corresponding to the plural choices. As a result, search results that are more desirable are able to be obtained.

Further, the terminal device 10 receives a handwritten input on a display screen. Furthermore, according to the handwritten input on the display screen, the terminal device 10 uses contents of the handwritten input by referring to an attribute of the display screen. As a result, the contents of the handwritten input are able to be used with the attribute of the display screen being reflected therein.

Further, a display screen of the terminal device 10 is a screen for menu display having plural hierarchical layers, and the terminal device 10 uses contents of a handwritten input by referring to a menu hierarchical layer on the display screen. As a result, the contents of the handwritten input are able to be used with the menu hierarchical layer being reflected therein.

In the above described embodiment, the screen display DB 126 and the order DB 127 are provided in the server device 100, but limitation is not made thereto. For example, the screen display DB 126 and the order DB 127 may be provided in the terminal device 10. Thereby, response of screen display in the terminal device 10 is able to be improved.

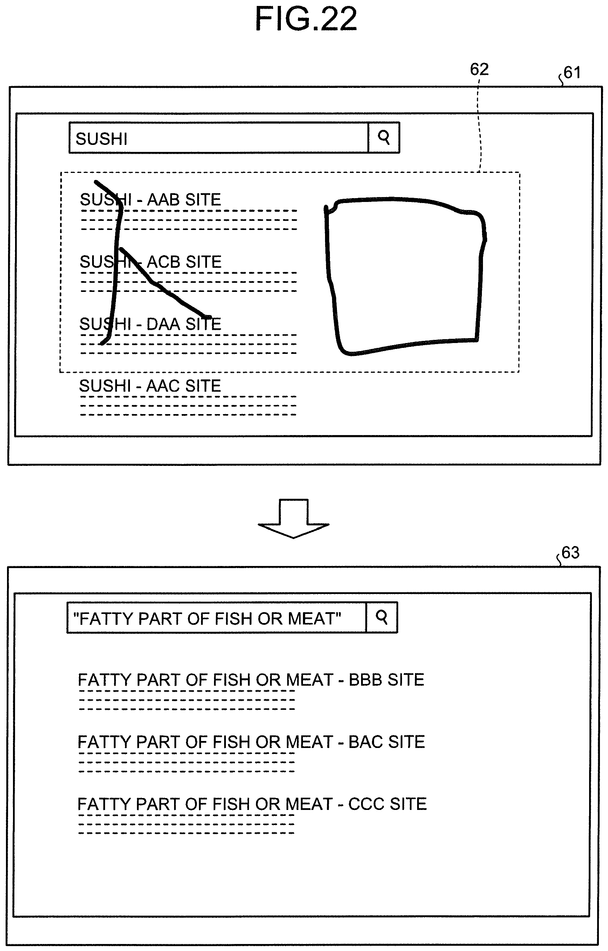

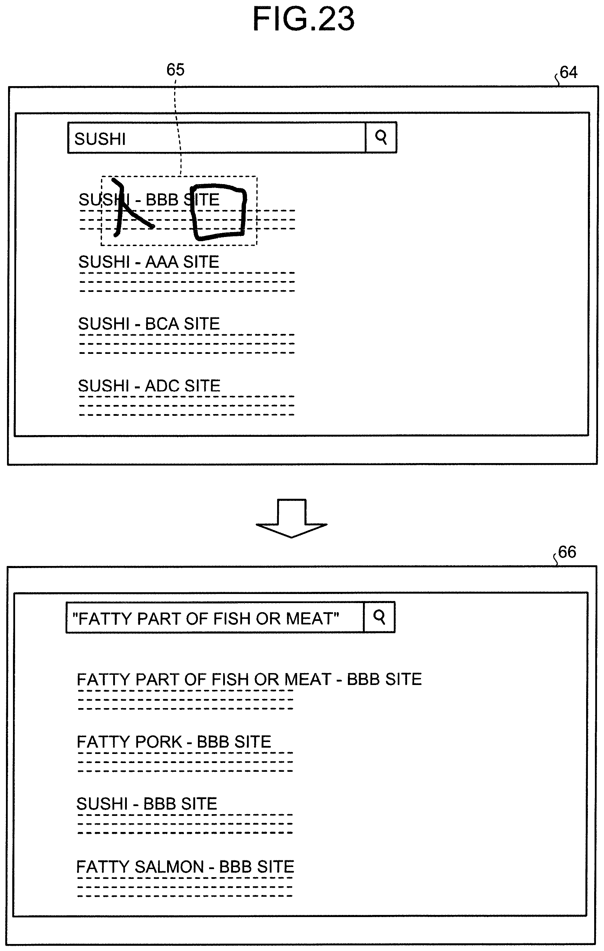

Further, with respect to the above embodiment, an example where application is made to a menu screen has been described, but limitation is not made thereto. For example, as illustrated in FIG. 22 and FIG. 23, application may be made to search through Web sites. FIG. 22 is a diagram illustrating another example of the screen transition according to a handwritten input. FIG. 22 illustrates, for example, a case where "toro" has been input by handwritten input on a search screen 61 where "sushi" has been searched for. An input area 62 where "toro" has been input extends over plural search results, that is, "AAB site", "ACB site", and "DAA site", in the search screen 61. Thus, the determination unit 16 of the terminal device 10 determines that "toro" has been input in a non-associated area, and causes a search screen 63 to be displayed, the search screen 63 being results of a search for "fatty part of fish or meat" without addition of any other search condition. Thereby, without being returned to the uppermost screen of the search site once, a new word is able to be searched for.

FIG. 23 is a diagram illustrating another example of the screen transition according to a handwritten input. FIG. 23 illustrates, for example, a case where "toro" has been input by handwritten input on "BBB site" in a search screen 64 where "sushi" has been searched for. An input area 65 where "toro" has been input is on a single search result, that is, on "BBB site" in the search screen 64. Thus, the determination unit 16 of the terminal device 10 determines that "toro" has been input in an associated area of "BBB site", and causes a search screen 66 to be displayed, the search screen 66 being results of a search for "fatty part of fish or meat" in "BBB site". Thereby, without being directed to a site of the associated area, a more refined search is able to be executed.

Further, each component of the respective units illustrated in the drawings is not necessarily physically configured as illustrated in the drawings. That is, specific modes of separation and integration of the respective units are not limited to those illustrated in the drawings, and all or a part thereof may be configured to be functionally or physically separated or integrated in arbitrary units depending on various loads, use situations, and the like. For example, the use control unit 17 and the search unit 18 may be integrated together.

Further, all or any part of the various processing functions executed in the respective devices may be executed on a CPU (or a micro computer, such as an MPU or a micro controller unit (MCU)). Further, needless to say, all or any part of the various processing functions may be executed on a program analyzed and executed by a CPU (or a micro computer, such as an MPU or MCU) or on hardware by wired logic.

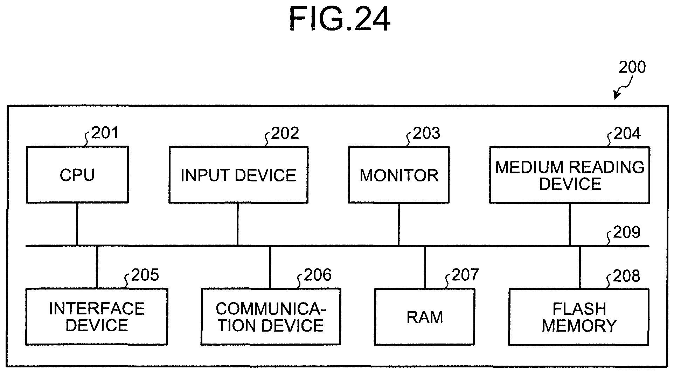

The various processes described in the above embodiment may be realized by a program that has been prepared beforehand, the program being executed by a computer. Accordingly, hereinafter, an example of a computer that executes a program having the same functions as those of the above described embodiment will be described. FIG. 24 is a diagram illustrating an example of a computer that executes an input reception program.

As illustrated in FIG. 24, a computer 200 has: a CPU 201 that executes various types of arithmetic processing; an input device 202 that receives input of data; and a monitor 203. Further, the computer 200 has a medium reading device 204 that reads a program and the like from a storage medium, an interface device 205 for connecting to various devices, and a communication device 206 for connecting wiredly or wirelessly to another information processing device and the like. Further, the computer 200 has a RAM 207 that temporarily stores therein various types of information, and a flash memory 208. Further, each of these devices 201 to 208 is connected to a bus 209.

Stored in the flash memory 208 is the input reception program having the same functions as the respective processing units, including the reception unit 15, the determination unit 16, the use control unit 17, and the search unit 18, which are illustrated in FIG. 1. Further, various data for realizing the input reception program are stored in the flash memory 208. The input device 202 receives, for example, input of various types of information, such as operation information, from a user of the computer 200. The monitor 203 displays thereon various screens, such as menu screens, for the user of the computer 200, for example. A printing device and the like, for example, are connected to the interface device 205. The communication device 206, for example, has the same functions as the communication unit 11 illustrated in FIG. 1, is connected to the network N, and exchanges various types of information, such as a search request and display screen data, with the server device 100.

The CPU 201 executes various processes by reading respective programs stored in the flash memory 208 and expanding and executing the programs in the RAM 207. Further, these programs are able to cause the computer 200 to function as the reception unit 15, the determination unit 16, the use control unit 17, and the search unit 18, which are illustrated in FIG. 1.

The above described input reception program is not necessarily stored in the flash memory 208. For example, a program stored in a storage medium that is readable by the computer 200 may be read out and executed by the computer 200. The storage medium readable by the computer 200 corresponds to, for example: a portable recording medium, such as a CD-ROM, a DVD disk, or a universal serial bus (USB) memory; a semiconductor memory, such as a flash memory; or a hard disk drive. Further, this input reception program may be stored beforehand in a device connected to a public line, the Internet, a local area network (LAN), or the like; and the computer 200 may read and execute the input reception program therefrom. Reference Signs List

1 INFORMATION PROCESSING SYSTEM
10 TERMINAL DEVICE
11 COMMUNICATION UNIT
12 DISPLAY OPERATION UNIT
13 STORAGE UNIT
14 CONTROL UNIT
15 RECEPTION UNIT
16 DETERMINATION UNIT
17 USE CONTROL UNIT
18 SEARCH UNIT
100 SERVER DEVICE
110 COMMUNICATION UNIT
120 STORAGE UNIT
121 CLASSIFICATION DB
122 CATEGORY DB
123 MERCHANDISE ITEM DB
124 MATERIAL DB
125 OPTION DB
126 SCREEN DISPLAY DB
127 ORDER DB
130 CONTROL UNIT
131 DB MANAGEMENT UNIT
N NETWORK

## Claims

1. An input reception method comprising:
using input contents of a handwritten input in: a process of narrowing down menu items of a lower layer of a specific menu item; or a process of receiving the input contents as contents of an instruction related to an order for the specific menu item; when it is detected that the handwritten input has been executed at an input position corresponding to the specific menu item of plural menu items displayed on a display screen.

2. An input reception method comprising:
displaying a menu of a first hierarchical layer having a group of choices, the menu being from menus having a hierarchical structure; and
displaying, according to a handwritten input on a display screen of the menu of the first hierarchical layer, an item of a hierarchical layer lower than the first hierarchical layer, the item being related to input contents of the handwritten input.

3. An input reception method comprising:
determining, according to a handwritten input on a display screen, whether or not the handwritten input is an input associated with a specific element displayed on the display screen; and
when determined that the handwritten input is the input associated with the specific element displayed on the display screen, using contents of the handwritten input by a use method different from that in a case where the handwritten input is not determined to be the input associated with the specific element displayed on the display screen.

4. The input reception method according to claim 3, wherein the contents of the handwritten input are used by reference to an attribute of the specific element, when the handwritten input is determined to be the input associated with the specific element displayed on the display screen.

5. The input reception method according to claim 4, wherein a method, by which the attribute of the specific element is referred to, is changed according to a classification of the contents of the handwritten input.

6. The input reception method according to any one of claims 3 to 5, further comprising:
outputting a search request for a search through alternatives corresponding to plural choices, based on the contents of the handwritten input, when the handwritten input is an input on a display screen where the plural choices are displayed.

7. An input reception method comprising:
receiving a handwritten input on a display screen; and
using contents of the handwritten input by referring to an attribute of the display screen, according to the handwritten input on the display screen.

8. The input reception method according to claim 7, wherein the display screen is a screen for display of menus having plural hierarchical layers, and the contents of the handwritten input are used by reference to a hierarchical layer of a menu on the display screen.

9. An input reception program that causes a computer to execute a process comprising:
using input contents of a handwritten input in: a process of narrowing down menu items of a lower layer of a specific menu item; or a process of receiving the contents as contents of an instruction related to an order for the specific menu item; when it is detected that the handwritten input has been executed at an input position corresponding to the specific menu item of plural menu items displayed on a display screen.

10. An input reception program that causes a computer to execute a process comprising:
displaying a menu of a first hierarchical layer having a group of choices, the menu being from menus having a hierarchical structure; and
displaying, according to a handwritten input on a display screen of the menu of the first hierarchical layer, an item of a hierarchical layer lower than the first hierarchical layer, the item being related to input contents of the handwritten input.

11. An input reception program that causes a computer to execute a process comprising:
determining, according to a handwritten input on a display screen, whether or not the handwritten input is an input associated with a specific element displayed on the display screen; and
when determined that the handwritten input is the input associated with the specific element displayed on the display screen, using contents of the handwritten input, by a use method different from that in a case where the handwritten input is not determined to be the input associated with the specific element displayed on the display screen.

12. The input reception program according to claim 11, wherein the contents of the handwritten input are used by reference to an attribute of the specific element, when the handwritten input is determined to be the input associated with the specific element displayed on the display screen.

13. The input reception program according to claim 12, wherein a method, by which the attribute of the specific element is referred to, is changed according to a classification of the contents of the handwritten input.

14. The input reception program according to any one of claims 11 to 13, further comprising:
outputting a search request for a search through alternatives corresponding to plural choices, based on the contents of the handwritten input, when the handwritten input is an input on a display screen where the plural choices are displayed.

15. An input reception program that causes a computer to execute a process comprising:
receiving a handwritten input on a display screen; and
using contents of the handwritten input by referring to an attribute of the display screen, according to the handwritten input on the display screen.

16. The input reception program according to claim 15, wherein the display screen is a screen for display of menus having plural hierarchical layers, and the contents of the handwritten input are used by reference to a hierarchical layer of a menu on the display screen.

17. A terminal device comprising:
a detection unit that detects that a handwritten input has been executed at an input position corresponding to a specific menu item of plural menu items displayed on a display screen, and
a processing unit that uses input contents of the handwritten input detected by the detection unit in a process of narrowing down menu items of a lower layer of the specific menu item, or a process of receiving the input contents as contents of an instruction related to an order for the specific menu item.

18. A terminal device comprising a display unit that executes:
displaying a menu of a first hierarchical layer having a group of choices, the menu being from menus having a hierarchical structure; and
displaying, according to a handwritten input on a display screen of the menu of the first hierarchical layer, an item of a hierarchical layer lower than the first hierarchical layer, the item being related to input contents of the handwritten input.

19. A terminal device comprising:
a determination unit that determines, according to a handwritten input on a display screen, whether or not the handwritten input is an input associated with a specific element displayed on the display screen; and
a use control unit that uses contents of the handwritten input, by a use method different from that in a case where the handwritten input is not determined to be the input associated with the specific element displayed on the display screen, when determined that the handwritten input is the input associated with the specific element displayed on the display screen.

20. The terminal device according to claim 19, wherein the use control unit uses the contents of the handwritten input by referring to an attribute of the specific element, when the handwritten input is determined to be the input associated with the specific element displayed on the display screen.

21. The terminal device according to claim 20, wherein the use control unit changes a method, by which the attribute of the specific element is referred to, according to a classification of the contents of the handwritten input.

22. The terminal device according to any one of claims 19 to 21, further comprising:
a search unit that outputs a search request for a search through alternatives corresponding to plural choices, based on the contents of the handwritten input, when the handwritten input is an input on a display screen where the plural choices are displayed.

23. A terminal device comprising:
a reception unit that receives a handwritten input on a display screen; and
a use control unit that uses contents of the handwritten input by referring to an attribute of the display screen, according to the handwritten input on the display screen.

24. The terminal device according to claim 23, wherein the display screen is a screen for display of menus having plural hierarchical layers, and the use control unit uses the contents of the handwritten input by referring to a hierarchical layer of a menu on the display screen.
